# EUROPEAN PATENT SPECIFICATION

(11) **EP 2 751 606 B1**
(45) Date of publication and mention of the grant of the patent: **31.10.2018**
(21) Application number: 12770321.3
(22) Date of filing: 30.08.2012
(51) Int. Cl.: G02B 6/44

(54) **APPARATUS AND METHOD FOR TOOLLESSLY, RELEASABLY ATTACHING COMPONENTS TO AN OPTICAL FIBER DISTRIBUTION FRAME**
APPARAT UND VERFAHREN ZUR WERKZEUGLOSEN, LÖSBAREN BEFESTIGUNG VON KOMPONENTEN AN EINEM GLASFASERVERTEILERSCHRANK
APPAREIL ET MÉTHODE POUR LA FIXATION DETACHABLE SANS OUTILS DE COMPOSANTS À UN CADRE DE DISTRIBUTION DE FIBRES OPTIQUES

(30) Priority: 02.09.2011 US 201161530697 P
(43) Date of publication of application: 09.07.2014
(73) Proprietor: Corning Optical Communications LLC, Hickory, NC 28601 (US)
(72) Inventor: BAKER, Steven Ray, Justin, Texas 76247 (US); DAGLEY, Mark Robert, Fort Worth, Texas 76137 (US); WILLIAMS, Anthony Lynn, Fort Worth, Texas 76108 (US); WORKS, Antwan Joco'ques, Lewisville, Texas 75077 (US)
(74) Representative: Sturm, Christoph
(86) International application number: PCT/US2012/052962
(87) International publication number: WO 2013/033281

(56) References cited:
- EP-A1- 0 759 180
- EP-A2- 1 310 816
- EP-A2- 2 159 613
- US-A- 5 668 910
- US-A1- 2002 150 372
- US-A1- 2005 067 358
- US-A1- 2007 183 732
- US-A1- 2008 050 085
- US-A1- 2010 158 465

## Description

### RELATED APPLICATIONS

This application claims the benefit of priority under 35 U.S.C. § 119 of U.S. Provisional Application Serial No. 61/530,697 filed on September 2, 2011.

### BACKGROUND

### Field of the Disclosure

The technology of the disclosure relates to optical components and an apparatus and method for toollessly, releasably attaching optical components to a structure.

### Technical Background

In the telecom industry, panels and modules serve as connection points, housing fiber optic adapters. Traditional methods for fastening metal panels or modules, even plastic, to an enclosure employ use of fasteners such as plungers and grommets or other types of mechanical fasteners, such as screws or captive fasteners. Fasteners in the panels or modules are used to secure the panel or module to another component by allowing the plunger / grommet system to snap in place. However, traditional methods are designed to support specific types of optical components making configuring or reconfiguring the structure for different optical components impossible or, at least, costly and time consuming.

US 5 668 910 A discloses an assembly having a storage spool, a wire guide and a patch panel. The wire guide is attached to a patch panel. The storage spool is attached to a wire guide 3. The storage spool, wire guide and patch panel are all optical components.

### SUMMARY OF THE DETAILED DESCRIPTION

Embodiments disclosed herein include an apparatus and method for toollessly, releasably attaching an optical component to a structure. The apparatus comprises a snap fastener attached to the optical component and an accepting feature attached to the structure. When the snap fastener is brought into contact with the accepting feature, the accepting feature accepts the snap fastener thereby releasably attaching the optical component to the structure.

In another aspect, embodiments disclosed herein also include a cradle assembly having a cradle adapted to receive an optical component such that the optical component toollessly, releasably attaches to the cradle and a cradle connection assembly, wherein the cradle connection assembly is adapted to toollessly, releasably attach to a housing using a snap fastener. The optical component may be a module and/or an adapter panel having fiber optic adapters. Additionally, the optical component may be a slack box. The cradle assembly may include a hinge allowing the cradle to rotate between an unengaged position and an engaged position. A snap fastener may releasably, toollessly attach the cradle in the engaged position.

In another aspect, embodiments disclosed herein also include a method for toollessly, releasably attaching an optical component to a structure. The method includes, providing a snap fastener attached to the optical component, providing an accepting feature attached to the structure, and moving the optical component such that the snap fastener contacts the accepting feature wherein the accepting feature accepts the snap fastener toollessly, releasably attaching the optical component to the structure. The structure may be an enclosure, a housing, or a chassis. Additionally, the structure may be a cradle. The optical component may be a module and/or an adapter panel, each of which may have adapters. Additionally, the optical component may be a slack box

Additional features and advantages will be set forth in the detailed description which follows, and in part will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE FIGURES

**FIG. 1** is a perspective, partially exploded view of an exemplary embodiment of a cable assembly toollessly, releasably attachable using snap fasteners;
**FIG.** 1A is a partial, bottom, exploded perspective view of a slack box and a cradle of the cradle assembly of **FIG. 1** toollessly, releasably attachable using snap fasteners;
**FIG. 2** is a view of a module as ready to be inserted into the cradle of the cradle assembly of FIG. 1, with the cradle assembly shown toollessly, releasably attached to an enclosure or housing;
**FIG. 3** is a view of the snap fastener in the side flange of an adapter panel for toollessly, releasably attaching the adapter to the cradle assembly of **FIG. 1**;
**FIG. 4A** is a top view of the snap fastener to be toollessly, releasably attached to an accepting feature;
**FIG. 4B** is a top view of the snap fastener of **FIG. 4A** toollessly, releasably attached to an accepting feature;
**FIG. 5** is a front, perspective view of the cable assembly of FIG. 1 with the module releasably, toollessly attached to the housing;
**FIG. 5A** is a partial, perspective detail view of the cradle connection assembly of the cradle assembly of **FIG. 1**, showing a catch flange extending from a cradle plate;
**FIG. 6** is a perspective, rear view of the cradle assembly of **FIG. 1** shown between an unrotated, unengaged position and a rotated engaged position;
**FIG. 7** is a perspective, rear view of the cradle assembly of **FIG. 1** shown in the rotated, engaged position;
**FIG. 8A** is a top, perspective view of an exemplary embodiment adapter panel that has the snap fastener molded into the panel;
**FIG. 8B** is a side, perspective view of the adapter panel of **FIG. 8A**;
**FIG. 8C** is a bottom, perspective view of the adapter panel of **FIG. 8A**.

### DETAILED DESCRIPTION

Reference will now be made in detail to the embodiments, examples of which are illustrated in the accompanying drawings, in which some, but not all embodiments are shown. Indeed, the concepts may be embodied in many different forms and should not be construed as limiting herein; rather, these embodiments are provided so that this disclosure will satisfy applicable legal requirements. Whenever possible, like reference numbers will be used to refer to like components or parts.

Embodiments disclosed herein relate to a snap fastener for toollessly, releasably locking optical components to a structure, for example, without limitation, an enclosure or chassis. The snap fastener may be any type or design of fastener that provides for toolless, releasable locking or attaching of one component to another. Additionally, the snap fastener may be one used for sheet metal as a non-limiting example, a Snap Lock™ fastener. In such a case, the snap fastener functions analogously to plastic snaps but is used for components constructed of sheet metal. Use of the snap fastener in panels and modules eliminates the need for additional fasteners or components to fasten or secure a panel or module within an enclosure. Other components within the enclosure may also employ use of the snap fastener to assemble or disassemble components and may eliminate the need for additional components and the use of tools for installation.

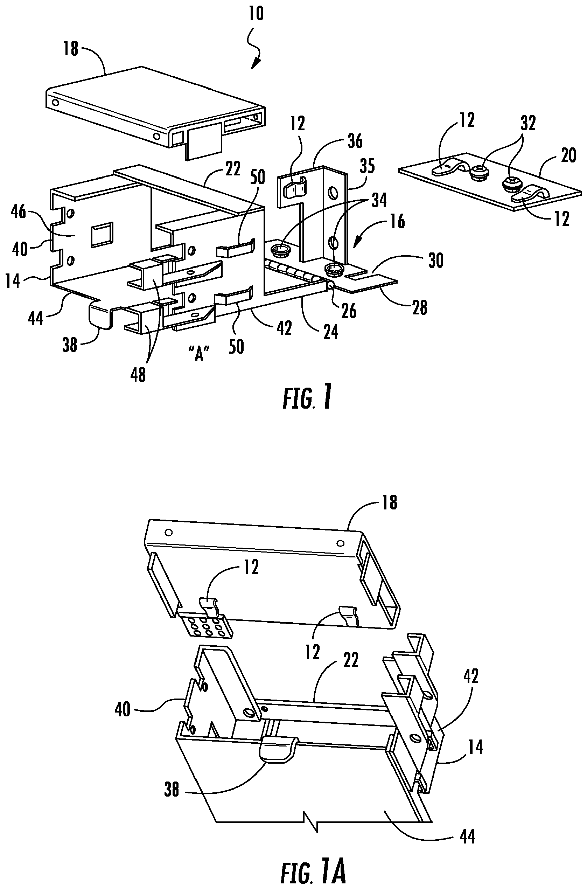

In this regard, **FIG. 1** illustrates a cradle assembly **10** that includes snap fasteners **12** to attach the components of the cradle assembly **10** to each other. The cradle assembly **10** includes a cradle **14**, a cradle connection assembly **16**, a slack box **18** and a housing plate **20**. The slack box **18** toollessly, releasably attaches to a cradle bar **22** on the cradle **14** using snap fasteners **12** as shown on **FIG. 1A****,** which illustrates a bottom, perspective partial detail view of the cradle assembly **10**. The slack box 18 may be used for storing fiber optic cable slack. The cradle **14** includes a cradle extension **24** which connects to the cradle connection assembly **16** at hinge **26** providing a rotatable connection between cradle extension **24** and cradle connection assembly **16** allowing the cradle **14** and the cradle connection assembly **16** to rotate about each other. In **FIG. 1**, the cradle **14** is shown in an un-rotated, unengaged position designated as "A". The housing plate **20** attaches to a surface of a housing (not shown in **FIG. 1**). The cradle connection assembly **16** has a cradle plate **28** with two slots **30**. The cradle connection assembly **16** toollessly, releasably attaches to the housing plate **20** by two snap fasteners **12** attached to the housing plate **20** positioning in the respective slots **30** in a cradle plate **28**. In this manner, since the housing plate **20** is attached to a surface of the housing and the cradle connection assembly **16** is toollesly, releasably attached to the housing plate **20**, due to the hinge **26**, the cradle **14** may rotate about the housing plate **20**, and, thereby, the housing. This will be discussed in more detail below. As an additional attachment to the housing, the cradle connection assembly **16** may be attached to the housing plate **20** using security screws **32** inserted into screw holes **34** in the cradle plate **28**.

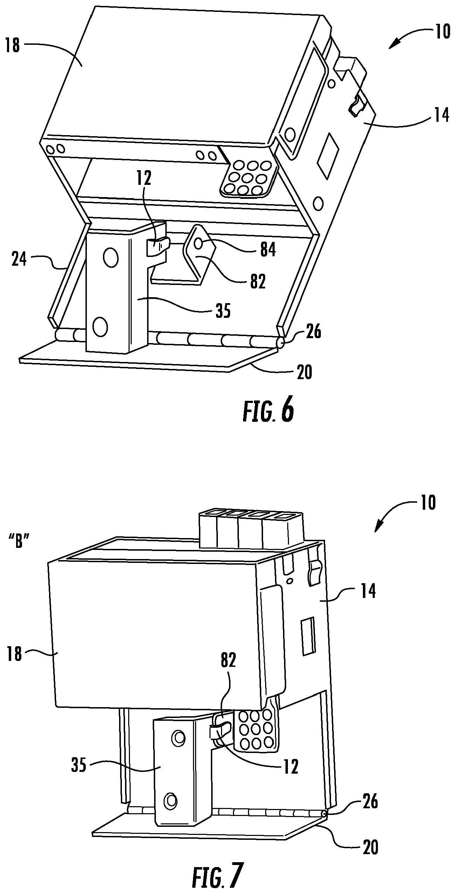

Continuing with reference to **FIG. 1**, the cradle connection assembly **16** includes a catch flange **35** attached to and extending from the cradle plate **28**. As shown in **FIG. 1**, the catch flange **35** may be a vertically extending right-angled structure with a tab feature **36**. The tab feature **36** provides a surface for locating a snap fastener **12** oriented in a direction toward the cradle **14**. The snap feature **12** is positioned such that as the cradle **14** rotates on the hinge **26**, the snap feature **12** engages a mating feature (not visible in **FIG. 1**) attached to the cradle extension **24**. In this manner, the snap feature **12** toollessly, releasably locks the cradle **14** in a rotated, engaged position (designated as "**B**" see **FIG. 7**) until the cradle **14** is rotated back to the un-rotated position **A**. A finger tab **38** may be used to rotate the cradle **14** between the un-rotated position and the rotated position.

The cradle **14** has a first side **40**, a second side **42** and a bottom **44**, which with the slack box **18** toollessly, releasably attached to the cradle bar **22**, define an interior **46** of the cradle **14**. One or more routing guides **48** may attach to either or both of the first side **40** and the second side **42**. Additionally, tie down lances **50** may extend from the first side **40** and/or the second side **42**. The routing guides **48** direct optical fibers around the sides **40**, **42** of the cradle **14**, while the tied down lances **50** may be used for fastening tie wraps, or the like, to restrain the optical fibers. In this way, the optical fibers associated with a module or an adapter panel may be organized and managed.

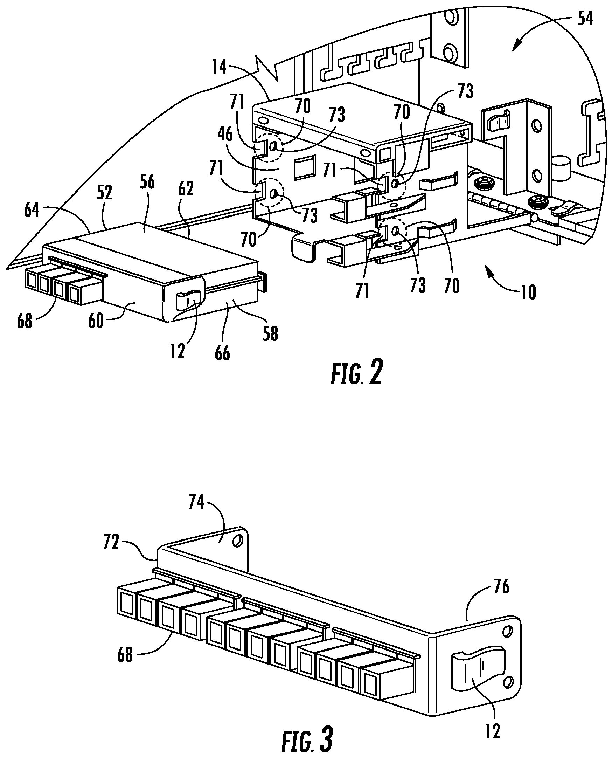

Referring now to **FIG 2** a module **52** positioned to be inserted into the cradle **14** in the un-rotated position is illustrated. The cradle assembly **10** is shown attached to a housing **54**. It should be understood that housing **54** is intended to refer to and include any type or design of structure to or on which the cradle assembly **10** may be attached. The module **52** may have a cover **56** and a base **58** with the base **58** having a front **60**, a back **62**, a first side **64** and a second side **66**. In **FIG. 2**, fiber optic adapters **68** in the form of SC adapters are shown mounted in the front **60**. Although SC adapters are shown, it should be understood that any type of fiber optic adapters **68** may be mounted in or on the module **52**. A snap fastener **12** is shown attached to the first side **62**. The module **52** may be inserted into the cradle **14** by inserting the back **62** of the module **52** in the interior **46**. As the module 52 inserts into the interior 46 of the cradle **14**, the snap fastener **12** engages an accepting feature **70** or mating part in the cradle **14** upon installation. In the embodiment shown in **FIG. 2**, the accepting feature **70** in the cradle **14** may be a rectangular cutout **71** and a snap hole **73**. The mating of the snap fastener **12** and the accepting feature **70** toollessly, releasably locks the module **52** in place within the cradle **14**.

An adapter panel **72** with adapters **68** mounted thereon may be used with the cradle assembly **10** in the same manner as a module **52**. **FIG. 3** illustrates an adapter panel **72** with a first side flange **74** and a second side flange **76**. The snap fastener **12** in the first and second side flanges **74**, **76** of an adapter panel **72** are designed to fit the cradle assembly **10** shown in **FIG. 2**. The snap fasteners **12** on both first and the second side flanges **74**, **76** (as it is in a module) engage the respective accepting feature **70** in the cradle **14** when installed. The snap fasteners **12** may serve as a stopping point as well during installation.

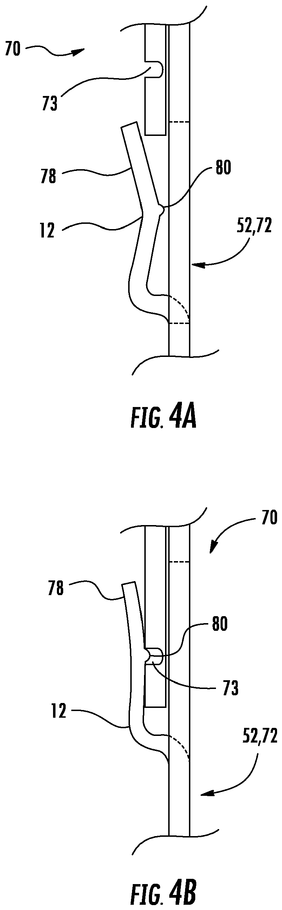

**FIGS. 4A and 4B** show the snap fastener **12** from a top view to illustrate the construction of the snap fastener **12** and its engagement with the mating part **70**.. An angled flange **78** acts as a guide or lift causing the snap fastener **12** to spring out when the mating part **70** into or on to the snap fastener **12**, or the snap fastener **12** sliding into or on to the mating part **70**. A barb **80** on the snap fastener **12** positions in the snap hole **73** and holds the panel **72** or module **52** in place. The barb **80** catches a snap hole **73** in the mating part.

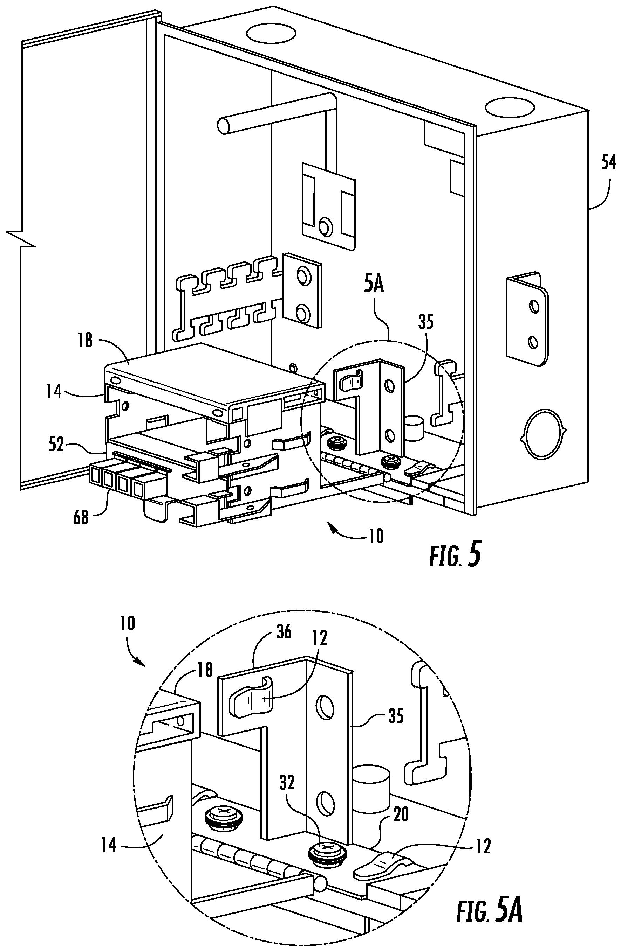

**FIGS. 5** and **5A** illustrate the cradle assembly **10** attached to the housing **54** via use of the snap fasteners **12** attached to the housing plate **20**, which is attached to the housing **54**. The housing plate **20** is shown as having two snap fasteners **12**, but it should be understood that the housing plate **20** may have any number of snap fasteners **12**. The cradle assembly **10** releasably, toollessly connects to the housing **54** via the cradle plate **28** of the cradle connection assembly **16**. The cradle plate **28** has two slots **30** each with the hole **31** to accept the respective snap fasteners **12**. The cradle assembly **10** may have security screws **32** extending through the screw holes **34** in the cradle plate **28** and into the housing plate **20** to ensure the cradle assembly **10** is fully secure to the housing **54** upon installation and that the cradle assembly **10** does not move once installed and the cradle **14** is in the engaged position.

**FIG. 6** shows a rear view of the cradle assembly **10** rotated between a unrotated, unengaged position "**A**" and a rotated, engaged position "**B**", or, in other words between and open and closed position. The cradle assembly **10** has a catch flange that contains the snap fastener. It is located such that upon opening and closing of the cradle assembly or rotational access, the cradle assembly **10** will engage the snap fastener 12 and releasably lock in place. In this regard, the cradle 14 has a mating flange **82** a hole **84** that receives the snap fastener **12** on the tab feature **36** to releasably, toollessly retain the cradle **14** in the rotated, engaged position "**B**".

**FIG. 7** shows a back view of the cradle **14** of the cradle assembly **10** in the rotated, engaged or closed position. In **FIG 7**, the snap fastener **12** on the tab feature **36** is fully engaged and mated with the mating flange **82**.

The snap fastener **12** provides advantages which include, without limitation, a cost savings due to reduced number of components and assembly of the components required for traditional methods has been eliminated. Additionally, hardware (such as screws, nuts, bolts, etc.) to fasten components to telecom enclosure in traditional methods may not be required, as well as, tools to assemble components. The snap fastener **12** may also function as a spring loaded tab in metal. Further, the snap fastener **12** allows panels and modules or rotational action of the cradle to be installed or removed multiple times while maintaining its function to spring back and forth to releasably lock or attach components in place.

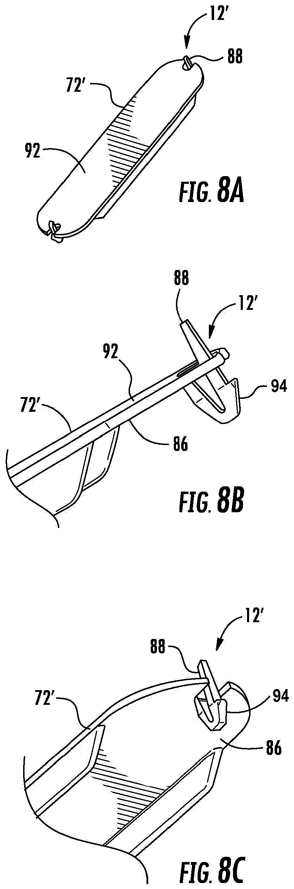

**FIGS. 8A**, **8B**, **8C** illustrate an exemplary embodiment of a plastic version of an adapter panel **72'** that has a snap fastener **12'** molded into the adapter panel **72'**. Although not shown in **FIGS. 8A**, **8B**, **8C** the adapter plate **72'** may have holes extending therethrough in which adapters may be mounted. The snap feature **12'** has a "**J**" hook **94** attached at one end to the adapter panel **72'** and extending from an inside surface **86** of the adapter panel **72'**. An actuator **88** is attached to and extends from the other end of the "**J**" hook **94** though an opening **90** in the adapter panel **72'** to a distance past the outside surface **92** of the adapter panel **72'**. The snap fastener **12'** is resilient in that the "**J**" hook **94** will toollessly, releasably locate and lock into a receiving slot in the cradle **14** when the adapter panel **72'** is attached to the cradle **14**. Manipulating the actuator 88 will release the "**J**" hook **94** from the receiving slot allowing the adapter plate **72'** to be removed from the cradle **14**.

Many modifications and other embodiments not set forth herein will come to mind to one skilled in the art to which the embodiments pertain having the benefit of the teachings presented in the foregoing descriptions and the associated drawings. Therefore, it is to be understood that the description and claims are not to be limited to the specific embodiments disclosed and that modifications and other embodiments are intended to be included within the scope of the appended claims. It is intended that the embodiments cover the modifications and variations of the embodiments provided they come within the scope of the appended claims. Although specific terms are employed herein, they are used in a generic and descriptive sense only and not for purposes of limitation.

## Claims

1. A cradle assembly (10), comprising:
a cradle (14) adapted to receive an optical component such that the optical component toollessly, releasably attaches to the cradle (14), namely by first snap fasteners (12) of the optical component engaging an accepting feature (70) or a mating part in the interior (46) of the cradle (14), wherein the accepting feature (70) or the mating part accepts the first snap fasteners (12) thereby toollessly, releasably locking the optical component in place within the cradle (14); and
a cradle connection assembly (16), wherein the cradle connection assembly (16) is adapted to toollessly, releasably attach to a housing (54), namely by second snap fasteners (12).

2. The cradle assembly of claim 1, wherein the optical component is a module (52), wherein the module (52) includes fiber optic adapters (68).

3. The cradle assembly of claim 1, wherein the optical component is an adapter panel (72), wherein the adapter panel (72) includes fiber optic adapters (68).

4. The cradle assembly of claim 1, wherein the optical component is a slack box (18).

5. The cradle assembly of one of claims 1-4, further comprising a hinge (26), wherein the hinge (26) allows the cradle (14) to rotate between an unengaged position and an engaged position.

6. The cradle assembly of claim 5, wherein a third snap fastener (12) releasably, toollessly attaches the cradle (14) in the engaged position.

7. The cradle assembly of claim 6, wherein the cradle connection assembly (16) comprises:
a cradle plate (28); and
a catch flange (35) extending from the cradle plate (28), wherein the catch flange (35) includes a tab feature (35), and wherein the third snap fastener (12) is mounted to the tab feature (35).

8. The cradle assembly of claim 7, wherein the third snap fastener (12) engages a mating feature attached to a cradle extension (24) which connects to the cradle connection assembly (16) at the hinge (26) providing a rotatable connection between the cradle extension (24) and the cradle connection assembly (16) allowing the cradle (14) and the connection assembly (16) to rotate about each other.

9. The cradle assembly of claim 7 or 8, wherein the cradle plate (28) has slots (30), and wherein the cradle connection assembly (16) toollessly, releasably attaches to a housing plate (20) by the second snap fasteners (12) attached to the housing plate (20) positioning in the slots (30) in the cradle plate (28), wherein housing plate (20) attaches to a surface of the housing (54).

10. The cradle assembly of one of claims 1-9, wherein the snap fasteners (12) have an angled flange (78) acting as a guide or lift causing the snap fastener (12) to spring out when the accepting feature (70) or mating part into or on to the snap fastener (12), or the snap fastener (12) sliding into or on to the accepting feature (70) or mating part.

11. The cradle assembly of one of claims 1-10, wherein the snap fasteners (12) have a barb (80) that catches a snap hole (73) of the accepting feature (70) or the mating part.

12. A method for toollessly, releasably attaching an optical component to a housing (54):
providing the optical component having first snap fasteners (12);
providing a cradle (14) having an accepting feature (70) or mating part attached to the cradle (14) in the interior (46) of the cradle (14) and having a cradle connection assembly (16);
moving the optical component such that the first snap fasteners (12) engages the accepting feature (70) or mating part of the cradle (14), wherein the accepting feature (70) or mating part of the cradle (14) accepts the first snap fastener (12) thereby toollessly, releasably locking the optical component within the cradle (14);
providing a housing (52);
providing second snap fasteners (12);
attaching the cradle connection assembly (16) toollessly, releasably to the housing (54) by the second snap fasteners (12).

13. The method of claim 12, wherein the optical component is one or more of a module (52), an adapter panel (72), and a slack box (18).

## Patentansprüche

1. Gestellanordnung (10), die Folgendes umfasst:
ein Gestell (14), das dazu ausgelegt ist, eine optische Komponente so aufzunehmen, dass sich die optische Komponente werkzeuglos und lösbar, nämlich durch erste Schnappverschlüsse (12) der optischen Komponente, die mit einer Aufnahmevorrichtung (70) oder einem Gegenstück in dem Innenraum (46) des Gestells (14) in Eingriff sind, an dem Gestell (14) befestigt, wobei die Aufnahmevorrichtung (70) oder das Gegenstück die ersten Schnappverschlüsse (12) aufnimmt und dadurch die optische Komponente werkzeuglos und lösbar innerhalb des Gestells (14) verriegelt; und
eine Gestellverbindungsanordnung (16), wobei die Gestellverbindungsanordnung (16) dazu ausgelegt ist, sich werkzeuglos und lösbar, nämlich durch zweite Schnappverschlüsse (12), an einem Gehäuse (54) zu befestigen.

2. Gestellanordnung nach Anspruch 1, wobei die optische Komponente ein Modul (52) ist, wobei das Modul (52) faseroptische Adapter (68) enthält.

3. Gestellanordnung nach Anspruch 1, wobei die optische Komponente ein Adapterpanel (72) ist, wobei das Adapterpanel (72) faseroptische Adapter (68) enthält.

4. Gestellanordnung nach Anspruch 1, wobei die optische Komponente ein Überlängengehäuse (18) ist.

5. Gestellanordnung nach einem der Ansprüche 1-4, die ferner ein Gelenk (26) umfasst, wobei das Gelenk (26) dem Gestell (14) ermöglicht, sich zwischen einer Nichteingriffposition und einer Eingriffposition zu drehen.

6. Gestellanordnung nach Anspruch 5, wobei sich ein dritter Schnappverschluss (12) lösbar und werkzeuglos an dem Gestell (14) in der Eingriffposition befestigt.

7. Gestellanordnung nach Anspruch 6, wobei die Gestellverbindungsanordnung (16) Folgendes umfasst:
eine Gestellplatte (28); und
einen Fangflansch (35), der sich von der Gestellplatte (28) erstreckt, wobei der Fangflansch (35) eine Laschenvorrichtung (35) enthält und wobei der dritte Schnappverschluss (12) an der Laschenvorrichtung (35) befestigt ist.

8. Gestellanordnung nach Anspruch 7, wobei der dritte Schnappverschluss (12) mit einer Gegenstückvorrichtung in Eingriff ist, die an einer Gestellverlängerung (24) befestigt ist, die bei dem Gelenk (26) mit der Gestellverbindungsanordnung (16) verbunden ist, um eine drehbare Verbindung zwischen der Gestellverlängerung (24) und der Gestellverbindungsanordnung (16) bereitzustellen, um so dem Gestell (14) und der Verbindungsanordnung (16) zu ermöglichen, sich um einander zu drehen.

9. Gestellanordnung nach Anspruch 7 oder 8, wobei die Gestellplatte (28) Schlitze (30) besitzt und wobei sich die Gestellverbindungsanordnung (16) werkzeuglos und lösbar an einer Gehäuseplatte (20) durch die zweiten Schnappverbindungen (12), die an der Gehäuseplatte (20) befestigt sind, in den Schlitzen (30) in der Gestellplatte (28) positioniert befestigt, wobei sich die Gehäuseplatte (20) an einer Oberfläche des Gehäuses (54) befestigt.

10. Gestellanordnung nach einem der Ansprüche 1-9, wobei die Schnappverbindungen (12) einen gewinkelten Flansch (78) besitzen, der wie eine Führung oder eine Hebevorrichtung wirkt und bewirkt, dass die Schnappverbindung (12) herausspringt, wenn die Aufnahmevorrichtung (70) oder das Gegenstück in oder auf die Schnappverbindung (12) oder die Schnappverbindung (12) in das Gegenstück oder die Aufnahmevorrichtung (70) hineingleitet oder darauf gleitet.

11. Gestellanordnung nach einem der Ansprüche 1-10, wobei die Schnappverbindungen (12) einen Widerhaken (80), der ein Schnapploch (73) der Aufnahmevorrichtung (70) oder des Gegenstücks fängt, besitzen.

12. Verfahren zum werkzeuglosen und lösbaren Befestigen einer optischen Komponente an einem Gehäuse (54), das Folgendes umfasst:
Bereitstellen der optischen Komponente, die erste Schnappverbindungen (12) besitzt;
Bereitstellen eines Gestells (14), das eine Aufnahmevorrichtung (70) oder ein Gegenstück besitzt, das in dem Innenraum (46) des Gestells (14) an dem Gestell (14) befestigt ist, und eine Gestellverbindungsanordnung (16) besitzt;
Bewegen der optischen Komponente so, dass die ersten Schnappverbindungen (12) mit der Aufnahmevorrichtung (70) oder dem Gegenstück des Gestells (14) in Eingriff sind, wobei die Aufnahmevorrichtung (70) oder das Gegenstück des Gestells (14) die ersten Schnappverbindungen (12) aufnimmt und dadurch die optische Komponente innerhalb des Gestells (14) werkzeuglos und lösbar verriegelt;
Bereitstellen eines Gehäuses (52);
Bereitstellen zweiter Schnappverbindungen (12);
Befestigen der Gestellverbindungsanordnung (16) werkzeuglos und lösbar an dem Gehäuse (54) durch die zweiten Schnappverbindungen (12).

13. Verfahren nach Anspruch 12, wobei die optische Komponente eines oder mehrere von Folgendem ist: ein Modul (52), ein Adapterpanel (72) und ein Überlängengehäuse (18).

## Revendications

1. Ensemble berceau (10), comprenant :
un berceau (14) adapté pour recevoir un composant optique de telle sorte que le composant optique soit fixé sans outil, de manière libérable au berceau (14), à savoir par enclenchement de premières fixations par pression (12) du composant optique avec un élément de réception (70) ou une pièce homologue dans l'intérieur (46) du berceau (14), dans lequel l'élément de réception (70) ou la pièce homologue reçoit les premières fixations par pression (12), verrouillant ainsi sans outil, de manière libérable, le composant optique en position à l'intérieur du berceau (14) ;
un ensemble de connexion de berceau (16), l'ensemble de connexion de berceau (16) étant adapté pour être fixé sans outil, de manière libérable, à un boîtier (54), à savoir par des deuxièmes fixations par pression (12).

2. Ensemble berceau selon la revendication 1, dans lequel le composant optique est un module (52), le module (52) comportant des adaptateurs pour fibres optiques (68).

3. Ensemble berceau selon la revendication 1, dans lequel le composant optique est un panneau adaptateur (72), le panneau adaptateur (72) comportant des adaptateurs pour fibres optiques (68) .

4. Ensemble berceau selon la revendication 1, dans lequel le composant optique est une boîte de mou (18) .

5. Ensemble berceau selon l'une des revendications 1 à 4, comprenant en outre une articulation (26), l'articulation (26) permettant au berceau (14) de tourner entre une position non enclenchée et une position enclenchée.

6. Ensemble berceau selon la revendication 5, dans lequel une troisième fixation par pression (12) fixe de manière libérable, sans outil, le berceau (14) dans la position enclenchée.

7. Ensemble berceau selon la revendication 6, dans lequel l'ensemble de connexion de berceau (16) comprend :
une plaque de berceau (28) ; et
une bride d'arrêt (35) partant de la plaque de berceau (28), la bride d'arrêt (35) comportant un élément de languette (35), et dans lequel la troisième fixation par pression (12) est montée sur l'élément de languette (35).

8. Ensemble berceau selon la revendication 7, dans lequel la troisième fixation par pression (12) se met en prise avec un élément homologue fixé à une rallonge de berceau (24) qui se raccorde à l'ensemble de connexion de berceau (16) au niveau de l'articulation (26) assurant une connexion rotative entre la rallonge de berceau (24) et l'ensemble de connexion de berceau (16) qui permet au berceau (14) et à l'ensemble de connexion (16) de tourner l'un autour de l'autre.

9. Ensemble berceau selon la revendication 7 ou 8, dans lequel la plaque de berceau (28) présente des fentes (30), et dans lequel l'ensemble de connexion de berceau (16) est fixé sans outil, de manière libérable à une plaque de boîtier (20) par le positionnement des deuxièmes fixations par pression (12) fixées à la plaque de boîtier (20) dans les fentes (30) dans la plaque de berceau (28), dans lequel la plaque de boîtier (20) est fixée à une surface du boîtier (54).

10. Ensemble berceau selon l'une des revendications 1 à 9, dans lequel les fixations par pression (12) présentent une bride inclinée (78) faisant office de guide ou d'élément de levée qui amène la fixation par pression (12) à s'éjecter par effet ressort quand l'élément de réception (70) ou la pièce homologue dans ou sur la fixation par pression (12), ou la fixation par pression (12) coulisse dans ou sur l'élément de réception (70) ou la pièce homologue.

11. Ensemble berceau selon l'une des revendications 1 à 10, dans lequel les fixations par pression (12) présentent un ardillon (80) qui s'enclenche avec un trou de fixation (73) de l'élément de réception (70) ou de la pièce homologue.

12. Procédé de fixation sans outil, de manière libérable d'un composant optique à un boîtier (54)
fournissant le composant optique présentant des premières fixations à pression (12);
fournissant un berceau (14) présentant un élément de réception (70) ou une pièce homologue fixé au berceau (14) dans l'intérieur (46) du berceau (14) et présentant un ensemble de connexion de berceau (16) ;
déplaçant le composant optique de telle sorte que les premières fixations à pression (12) se mettent en prise avec l'élément de réception (70) ou la pièce homologue du berceau (14), dans lequel l'élément de réception (70) ou la pièce homologue du berceau (14) reçoit la première fixation par pression (12), verrouillant ainsi sans outil, de manière libérable le composant optique à l'intérieur du berceau (14) ;
fournissant un boîtier (52) ;
fournissant des deuxièmes fixations par pression (12) ;
fixant l'ensemble de connexion de berceau (16) sans outil, de manière libérable au boîtier (54) par les deuxièmes fixations par pression (12).

13. Procédé selon la revendication 12, dans lequel le composant optique est un ou plusieurs d'un module (52), d'un panneau adaptateur (72), et d'une boîte de mou (18).
